Europäisches Patentamt

European Patent Office

Office européen des brevets

(19)

(11) Veröffentlichungsnummer: **0 076 460 B1**

(12) # EUROPÄISCHE PATENTSCHRIFT

(45) Veröffentlichungstag der Patentschrift:
24.07.85

(51) Int. Cl.⁴: **F 16 L 47/02, B 29 C 65/22**

(21) Anmeldenummer: **82108990.1**

(22) Anmeldetag: **29.09.82**

(54) Schweissverbindung für Kunststoffrohre.

(30) Priorität: **02.10.81 CH 6349/81**

(43) Veröffentlichungstag der Anmeldung:
**13.04.83 Patentblatt 83/15**

(45) Bekanntmachung des Hinweises auf die Patenterteilung:
**24.07.85 Patentblatt 85/30**

(84) Benannte Vertragsstaaten:
**AT BE DE FR GB IT LU NL SE**

(56) Entgegenhaltungen:
**EP - A - 0 008 912
EP - A - 0 035 750
BE - A - 556 713
CH - A - 528 697
CH - A - 532 996
DE - A - 1 479 231
DE - A - 2 514 827
FR - A - 2 422 896
GB - A - 1 409 224
US - A - 2 307 148**

(73) Patentinhaber: **GEORG FISCHER AKTIENGESELLSCHAFT, Mühlentalstrasse 105, CH-8201 Schaffhausen (CH)**

(72) Erfinder: **Thalmann, Alfred, Brunngasse 71, CH-8448 Uhwiesen (CH)**
Erfinder: **Reich, Fritz, Schulstrasse 449, CH-8448 Uhwiesen (CH)**

## Beschreibung

Die Erfindung betrifft eine Schweissverbindung wie sie im Oberbegriff von Anspruch 1 gekennzeichnet ist.

Aus der DE-B2-2 242 369 ist ein Verfahren zum Verschweissen von zwei Formstücken, genannt Sattelstücken, mit einem Kunststoffrohr bekanntgeworden, wobei eine Heizmatte das Rohr nicht überdeckend umschliesst, so dass bei grösseren Toleranzschwankungen bei den Rohrdurchmessern insbesondere auch bei grösseren Rohr-Abmessungen ein genügend grosser Spalt zwischen den Mattenenden als auch zwischen den Formstücken gewählt werden muss. Somit sind keine vollständigen Schweissverbindungen am gesamten Rohrumfang gewährleistet.

Auch eine Schweissverbindung der beiden Sattelstücke längs der beiden Spalte ist hierbei nicht gegeben, so dass mit diesem Verfahren keine vollkommen dichte Schweissverbindung zwischen einem oder zwei Rohren und zwei Formstücken möglich ist. Die Anwendung ist somit nur auf das Verschweissen eines mit einem Abzweigstutzen versehenen Sattelstückes mit einem Rohr begrenzt.

Zum Verbinden zweier Rohre sind zwar Schweissmuffen bekanntgeworden (z.B. CH-A-396 536) mittels welchen allseitig dichte Schweissverbindungen herstellbar sind. Da diese nicht in radialer Richtung auf ein bereits verlegtes Rohr aufsetzbar sind, sind diese zum Abdichten von lecken Rohrleitungen oder zum Erstellen von Abzweigleitungen an verlegten Rohrleitungen nicht verwendbar.

Aufgabe der vorliegenden Erfindung ist die Schaffung einer Schweissverbindung zum Verschweissen zweier Formstücke mit mindestens einem Kunststoffrohr der eingangs genannten Art, mittels welcher allseitig dichte Verbindungen zwischen Formstücken und Rohr auch bei grösseren Rohrabmessungen und verlegten Rohrleitungen hergestellt werden können, wobei die Schweissverbindung zur Reparatur von Rohrleitungen, zum Verbinden zweier oder mehrerer Rohrleitungen und zum Erstellen von Rohrabzweigungen bei durchgehenden Rohrleitungen anwendbar sein soll.

Erfindungsgemäss wird dies durch die im Anspruch 1 angegebenen kennzeichnenden Merkmale gelöst.

Weitere vorteilhafte Ausgestaltungen der Erfindung sind durch die übrigen Ansprüche gekennzeichnet.

Das erfindungsgemässe Merkmal der Anordnung jeweils einer von zwei Heizmatten in den Spalten zwischen den beiden Formstücken mit der umfangsmässigen Überlappung gewährleisten eine nach aussen vollkommen dichte Verschweissung eines oder zweier Rohre mit zwei Formstücken.

Es ist bekannt (EP-A-0 035 750) bei einer Schweissmuffe deren umfangsmässige Enden überlappend einen annähernd tangentialen Spalt bilden, eine Heizmatte in dem Spalt und am Rohrumfang so anzuordnen, dass sie diesen ganz umfasst, wodurch eine umfangsmässig vollständige Schweissverbindung entsteht. Die für eine radiale Montage erforderliche biegsame Ausbildung der Schweissmuffe ermöglicht die Verwendung dieser Schweissverbindung nur als Muffenverbindung zweier Rohre, so dass die Lösung der gestellten Aufgabe hiermit nicht möglich ist.

Das Merkmal der tangential verlaufenden Spalte ist durch die FR-A-2 422 896, das Merkmal der U-förmigen Ausbildung der Heizmatte ist durch die BE-A-556 713 und das Merkmal der halbringförmigen Ausnehmung in jedem Formteil ist durch die US-A-2 307 148 bekanntgeworden, doch betreffen diese in den Schriften beschriebenen Gegenstände nicht die gleiche gattungsmässige Schweissverbindung gemäss dem Oberbegriff von Anspruch 1.

Durch die Kombination der kennzeichnenden Merkmale ist die erfindungsgemässe Schweissverbindung nicht nur zum Verbinden von zwei Rohrenden, sondern auch bei der Reparatur undichter bzw. beschädigter Rohrleitungen und zum Anbringen von Abzweigleitungen bei verlegten Rohrleitungen einsetzbar.

Die Erfindung ist in beiliegenden Zeichnungen in mehreren Ausführungsbeispielen dargestellt und nachfolgend beschrieben.

Es zeigen:

Fig. 1 einen Längsschnitt einer Schweissverbindung von Formstücken mit einem Kunststoffrohr mit einer Dichtmatte zum Abdichten einer undichten Rohrleitung,

Fig. 2 einen Schnitt entlang der Linie II-II von Fig. 1,

Fig. 3 einen Schnitt entlang der Linie III-III von Fig. 1,

Fig. 4 eine Draufsicht auf die Heizmatte im flachgelegten Zustand,

Fig. 5 eine Seitenansicht eines Anbohrformstückes während dem Aufsetzen des unteren Halbschalen-Formstückes auf das Rohr,

Fig. 6 einen Längsschnitt einer Schweissverbindung eines durchgehenden Rohres mit einem Abzweigstück,

Fig. 7 einen Schnitt entlang der Linie VII-VII von Fig. 6,

Fig. 8 eine Ausführungsvariante von Fig. 6, wobei zwei Rohre mit einem Abzweigstück durch Schweissung verbunden sind und

Fig. 9 einen Schnitt entlang der Linie IX-IX von Fig. 8.

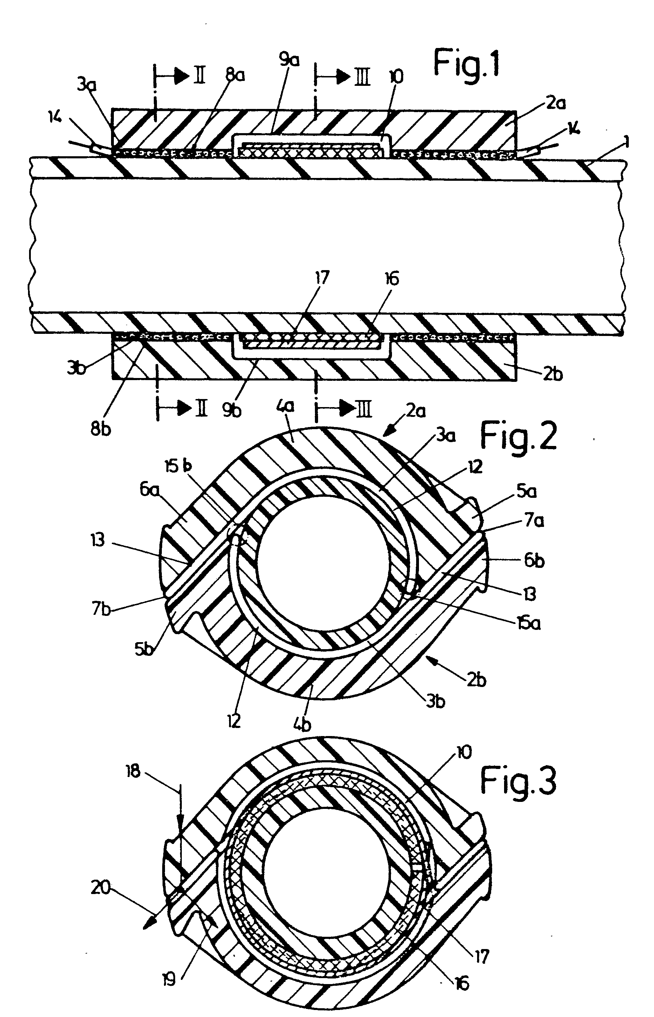

Die Fig. 1 bis 3 zeigen eine Schweissverbindung, wie sie zum Abdichten oder Verstärken beschädigter bzw. geschädigter verlegter Rohrleitungen verwendet wird.

Ein Kunststoffrohr 1 wird mit zwei auf das Rohr aufsetzbaren Formstücken 2a, 2b mittels zwei vorzugsweise identischen Heizmatten 3a, 3b verschweisst, von denen jede einem der Formstücke 2a, 2b zugeordnet ist. Jedes Formstück 2a, 2b besteht aus einer innen halbkreisförmigen Schale 4a, 4b an deren seitlichen Enden schräg bzw. in deren Verlängerung Flansche 5a, 5b und 6a, 6b angeordnet sind. Jeweils die beiden sich gegenüberliegenden Flansche 5a und 6b bzw. 5b und 6a bilden je einen in Längsrichtung des Rohres 1 verlaufenden Spalt 7a bzw. 7b, welcher vorzugsweise jeweils tangential zum Aussendurchmesser des Rohres 1 angeordnet ist. Die Spalte 7a, 7b können allerdings auch in einem spitzen bis rechten Winkel zu der Rohraussendurchmesser-Tangente verlaufen. Am Innendurchmesser der Formstücke 2a, 2b sind zwischen zwei für die Verschweissung erforderlichen Auflageflächen 8a, 8b halbringförmige Ausnehmungen 9a, 9b angeordnet, welche zusammen mit dem Aussendurchmesser des Rohres 1 eine Ringkammer 10 bilden.

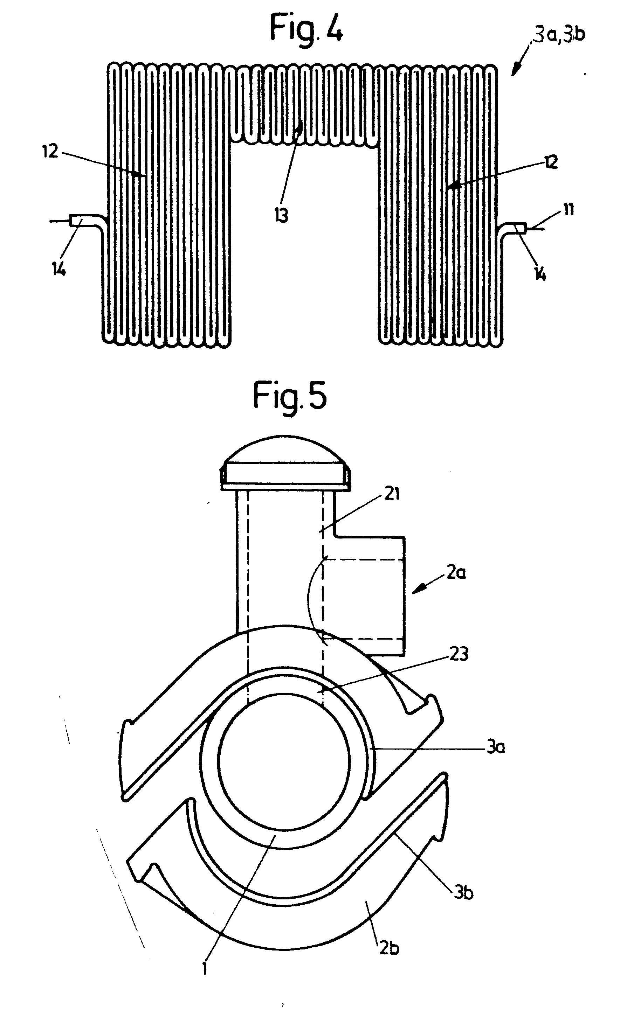

Die Fig. 4 zeigt eine flachgelegte Heizmatte 3a bzw. 3b, welche aus einer zick-zack-förmigen Anordnung eines mit Kunststoff ummantelten Heizdrahtes 11 besteht.

Der Heizdraht 11 ist so gewickelt, dass die Heizmatte U-förmig mit zwei Schenkeln 12 und einem Steg 13 ausgebildet ist. Die beiden abstehenden Enden 14 des Heizdrahtes jeder Heizmatte stehen im fertig montierten Zustand der Verbindung unter den Formstücken hervor und werden mittels Klemmoder Steckverbindungen an eine Stromquelle angeschlossen (siehe auch Fig. 1).

Jede Heizmatte 3a, 3b wird so zwischen dem Rohr 1 und den Formstücken 2a, 2b eingelegt, dass jeweils die beiden Schenkel 12 zwischen dem Aussendurchmesser des Rohres 1 und den Auflageflächen 8a bzw. 8b der Formstücke und der Steg 13 jeweils in einem der Spalte 7a bzw. 7b zu liegen kommt (siehe Fig. 1 und 2).

Die beiden Schenkel 12 der Heizmatten 3a, 3b umschliessen somit das Rohr 1 am vollen Umfang wobei das Ende des Schenkels 12 einer Heizmatte 3b bzw. 3a mit dem in dem Spalt 7a bzw. 7b angeordneten Steg 13 der anderen Heizmatte 3a bzw. 3b eine gegenseitige Überdeckung 15a bzw. 15b bildet. Dies ergibt zwei vollständige Umfangsschweissverbindungen zwischen dem Rohr und den Formstücken im Bereich der Auflageflächen und zwei durchgehende Längsschweissverbindungen zwischen den beiden Formstücken in den Spalten 7a und 7b.

Zur leichteren Montage ist jede der Heizmatten 3a, 3b an dem jeweiligen Formstück 2a, 2b befestigt, vorteilhafterweise werden die freien Enden der Schenkel 12 an den Auflageflächen 8a bzw. 8b z.B. mittels Schweissung oder Klebung befestigt.

Beim Zusammendrücken der beiden Formstücke mittels einer Kraft in Richtung des Pfeiles 18 entsteht neben der Presskraft gemäss Pfeil 19 eine Verschiebekraft gemäss Pfeil 20 welche die Heizmatte 3a bzw. 3b bis zu ihrer Befestigungsstelle an ihrem anderen Ende fest an die Rohroberfläche spannt (siehe Fig. 3). Dadurch wird gewährleistet, dass während dem Aufschmelzen des Kunststoffes und Andrücken der Formstücke an die Rohroberfläche die Heizmatte immer satt am Rohr und Formstück anliegt, so dass eine gute und dichte Schweissverbindung entsteht.

Die äussere Krafteinwirkung bewirkt somit eine Umfangsverringerung zum Überbrücken der Rohrtoleranzen und erzeugt eine Pressung während dem Schweissvorgang.

Die Flansche 5a, 6a bzw. 5b, 6b sind so ausgebildet, dass durch den Angriff von entsprechend ausgebildeten Spannzangen eine Krafteinwirkung entsprechend der gewünschten Kraftrichtung gemäss Pfeil 18 erreicht wird. Neben Spannzangen können auch Spann-Briden bzw. Bänder, Schraubzwingen oder ähnliche Spannelemente zur Erzeugung des gleichmässigen Schweiss- und Anlagedruckes verwendet werden.

Zur Reparatur einer undichten Rohrleitung z.B. für Gas wird zuerst die undichte Stelle mit einer Dichtmatte 16, welche mit einer Bandschelle 17 bzw. einem Spannband auf das Rohr 1 gedrückt wird, provisorisch abgedichtet (siehe Fig. 1 und 3). Die provisorische Abdichtung kann auch durch erhöht reissfestes z.B. durch Gewebe verstärktes Klebeband hergestellt werden. Anschliessend werden die beiden Formstücke 2a, 2b zusammen mit den Heizmatten 3a, 3b auf das Rohr aufgesetzt, wobei die provisorische Abdichtung in den Ausnehmungen 9a, 9b bzw. der Ringkammer 10 zu liegen kommt. Diese Kammer wird durch die nachträgliche Verschweissung vollkommen abgedichtet und umfasst die zu dichtende Stelle des Rohres vollständig. Somit können undichte Rohrleitungen ohne Abstellen bzw. Umleiten des durchfliessenden Mediums dauerhaft abgedichtet werden.

Ist das Rohr nur geschädigt bzw. beschädigt aber noch dicht, kann auf die provisorische Abdichtung verzichtet werden und die beiden Formteile werden zur Verstärkung des Rohres 1 so mit diesem verschweisst, dass die geschädigte Stelle in den Bereich der Kammer 10 zu liegen kommt.

Neben der Reparatur von bereits verlegten Rohrleitungen können die in den Fig. 1 bis 3 gezeigten Formstücke 2a, 2b mit deren Heizmatten 3a, 3b ebenfalls zum Verbinden zweier Rohre verwendet werden. Zur Verkürzung der Baulänge wird auch bei denen als Muffen ausgebildeten Formstücken die Ausnehmungen 9a, 9b weggelassen, wobei dann die Heizmatte rechteckförmig ausgebildet ist.

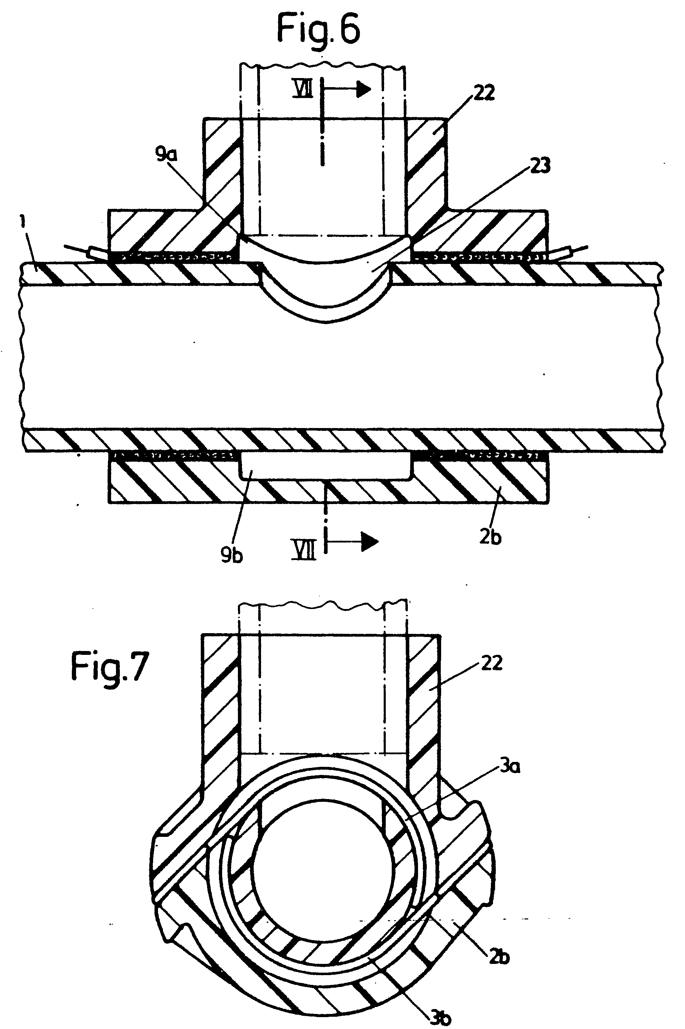

Wie aus Fig. 5 ersichtlich, kann eines der Formstücke als Anbohrformstück 21 ausgebildet sein, mittels welchem Abzweigleitungen an verlegten Rohrleitungen ohne Betriebsunterbrechung in bekannter Weise angeschlossen werden können. Das zweite Formstück 2b und die beiden Heizmatten 3a, 3b entsprechen den in den Fig. 1 bis 4 dargestellten Ausführungen, wobei durch die U-förmige Ausbildung der Heizmatten diese nach dem Schweissen nicht mehr durchbohrt weden müssen, so dass lediglich eine strichpunktiert angedeutete Bohrung 23 im Rohr 1 durch ein Anbohrwerkzeug erstellt werden muss.

Die Fig. 6 und 7 zeigen die Schweissverbindung eines Rohres 1 einer durchgehenden Rohrleitung mit einem als Abzweigstück 22 ausgebildeten Formstück, wobei eine Hälfte dem in den Fig. 1 bis 3 gezeigten Formstück 2b entspricht und die Heizmatten 3a, 3b ebenfalls U-förmig ausgebildet sind.

Durch diese Ausbildung der Heizmatten und die Anordnung zweier an den beiden Enden der Formstücke verlaufender Umfangsschweissungen und den beiden Längsschweissungen in den Spalten können die Abzweigstücke für Abzweigrohre mit einem grossen Durchmesser vorgesehen werden, welcher dem des Rohres 1 entsprechen kann. Die Bohrung 23 kann mit einer geeigneten Bohrvorrichtung bei einer drucklosen als auch unter Druck stehenden Rohrleitung angebracht werden. Dadurch können Abzweigleitungen mit grossem Querschnitt bei bestehenden, durchlaufenden Rohrleitungen angebracht werden, ohne diese durchtrennen zu müssen.

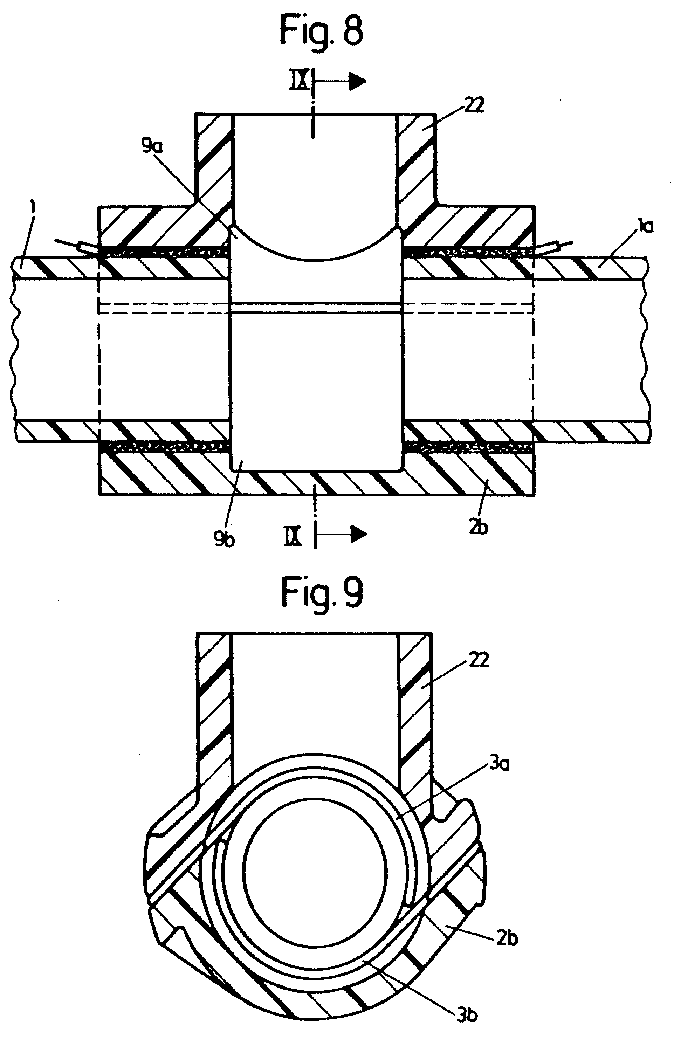

Die Fig. 8 und 9 zeigen die Schweissverbindung eines wie in Fig. 6 und 7 gezeigten Abzweigstückes 22, 2b mit zwei getrennten Rohren 1, 1a, wobei die beiden Heizmatten 3a, 3b wie bisher beschrieben ausgebildet sind und ebenfalls den Anschluss von Abzweigleitungen mit einem grossen Querschnitt ermöglichen.

Die Schweissverbindung ist für alle schweissbaren thermoplastischen Materialien wie z.B. Polyäthylen, Polypropylene usw. geeignet, wobei deren Teile ausser dem Widerstandsdraht jeweils aus den gleichen Materialien hergestellt sein sollten.

**Patentansprüche**

1. Schweissverbindung für mindestens ein Kunststoffrohr (1) mit zwei, auf das Rohr aufsetzbaren Formstücken (2a, 2b), welche im vormontierten Zustand zwei Längs-Spalte (7a, 7b) bilden und mit mindestens einer, zwischen den Formstücken und dem Rohr angeordneten Heizmatte (3a, 3b) aus einem mit Kunststoff ummantelten elektrisch aufheizbaren Draht (11), dadurch gekennzeichnet, dass jedem Formstück (2a, 2b) eine Heizmatte (3a, 3b) zugeordnet ist, wobei das eine Ende (13) jeder Heizmatte (3a, 3b) in jeweils einem der Spalte (7a, 7b) angeordnet ist, dass beide Heizmatten (3a, 3b) zusammen sich gegenseitig überlappend das Rohr (1) umfangsmässig ganz umfassen, dass die Spalte (7a, 7b) zwischen den beiden Formstücken (2a, 2b) annähernd tangential oder tangential zum Aussendurchmesser des Rohres (1) verlaufen, dass jede Heizmatte (3a, 3b) U-förmig ausgebildet ist, wobei deren beide Schenkel (12) am Rohrumfang verlaufend und der Verbindungssteg (13) in jeweils einem der Längs-Spalte (7a, 7b) angeordnet sind und dass jedes Formstück (2a, 2b) am Innendurchmesser zwei umfangsmässig angeordnete Auflageflächen (8a, 8b) mit einer dazwischenliegenden halbringförmigen Ausnehmung (9a, 9b) aufweist.

2. Schweissverbindung nach Anspruch 1, dadurch gekennzeichnet, dass die Ausnehmungen (9a, 9b) der beiden Formstücke (2a, 2b) zusammen mit dem Aussendurchmesser des Rohres (1) und den Schenkeln (12) der Heizmatten (3a, 3b) eine ringförmige Kammer (10) bilden.

3. Schweissverbindung nach einem der Ansprüche 1 oder 2, dadurch gekennzeichnet, dass die Heizmatte (3a bzw. 3b) am Innendurchmesser des Formstückes (2a, 2b) befestigt ist.

4. Schweissverbindung nach Anspruch 2, dadurch gekennzeichnet, dass in der Kammer (10) eine, ein Leck im Rohr (1) provisorisch abdichtende Ummantelung (16) angeordnet ist.

5. Schweissverbindung nach Anspruch 4, dadurch gekennzeichnet, dass die Ummantelung (16) aus einer mittels einer Bandschelle (17) auf das Rohr (1) gedrückten Dichtmatte (16) besteht.

6. Schweissverbindung nach Anspruch 4, dadurch gekennzeichnet, dass die Ummantelung (16) aus einem erhöht reissfesten Klebeband besteht.

7. Schweissverbindung nach einem der Ansprüche 1 bis 3, dadurch gekennzeichnet, dass die Formstücke (2a, 2b) als zwei Rohre (1) zu verbindende Muffe ausgebildet sind.

8. Schweissverbindung nach einem der Ansprüche 1 bis 3, dadurch gekennzeichnet, dass mindestens eines der Formstücke (2a) als Abzweigstück (22) für ein Abzweigrohr ausgebildet ist (Fig. 6-9).

9. Schweissverbindung nach einem der Ansprüche 1 bis 3, dadurch gekennzeichnet, dass mindestens eines der Formstücke (2a) als Anbohrformstück (21) ausgebildet ist (Fig. 5).

**Claims**

1. Welding joint for at least one plastics tube (1) with two shaped parts (2a, 2b) that can be placed on the tube, which parts define two longitudinal gaps (7a, 7b) in the pre-assembled state, and having at least one heating mat (3a, 3b) comprising an electrically heatable wire (11) covered by plastics and arranged between the shaped parts and the tube, characterised in that a heating mat (3a, 3b) is associated with each shaped part (2a, 2b) wherein one end (13) of each heating mat (3a, 3b) is arranged respectively in one of the gaps (7a, 7b), in that both heating mats (3a, 3b) together completely surround the circumference of the tube (1) in mutually overlapping manner, in that the gaps (7a, 7b) between the two shaped parts (2a, 2b) extend approximately tangentially of the outer diameter of the tube (1), in that each heating mat (3a, 3b) is of U-shaped construction, wherein both arms (12) running on the tube circumference, and the joint cross piece (13) are arranged in respectively one of the longitudinal gaps (7a, 7b), and in that each shaped part (2a, 2b) has on the inner diameter two contact surfaces (8a, 8b) arranged on the circumference with a semi-circular recess (9a, 9b) lying between them.

2. Welding joint according to claim 1, characterised in that the recesses (9a, 9b) of the two shaped parts (2a, 2b) together with the outer diameter of the tube (1) and the arms (12) of the heating mats (3a, 3b) form an annular chamber (10).

3. Welding joint according to one of claims 1 or 2, characterised in that the heating mat (3a or 3b) is secured on the inner diameter of the shaped part (2a, 2b).

4. Welding joint according to claim 2, characterised in that in the chamber (10) there is disposed a cover (16) which temporarily sels a leak in the tube (1).

5. Welding joint according to claim 4, characterised in that the cover (16) comprises a sealing mat (16) pressed onto the tube (1) by means of a clip (17).

6. Welding joint according to claim 4, characterised in that the cover (16) comprises a highly tear-resistant adhesive tape.

7. Welding joint according to one of claims 1 to 3, characterised in that the shaped parts (2a, 2b) are constructed as two tubes (1) to form a joining sleeve.

8. Welding joint according to one of claims 1 to 3, characterised in that at least one of the shaped parts (2a) is constructed as a branch piece (22) for a branch pipe (Figures 6-9).

9. Welding joint according to one of claims 1 to 3, characterised in that at least one of the shaped parts (2a) is constructed as a bored shaped part (21) (Figure 5).

**Revendications**

1. Liaison soudée pour au moins un tube en matière plastique (1) comportant deux pièces de forme (2a, 2b) pouvant être emmanchées sur le tube et qui, à l'état monté d'avance, forment deux fentes longitudinales (7a, 7b), et au moins un mat chauffant (3a, 3b) disposé entre les pièces de forme et le tube et constitué par un fil (11) pouvant être chauffé électriquement et enveloppé par une matière plastique, caractérisée en ce qu'à chaque pièce de forme (2a, 2b) est associé un mat chauffant (3a, 3b), une extrémité (13) de chaque mat chauffant (3a, 3b) étant disposée dans respectivement l'une des fentes (7a, 7b), que les deux mats chauffants (3a, 3b) enserrent complètement sur son pourtour le tube (1) en se recouvrant réciproquement, que les fentes (7a, 7b) situées entre les deux pièces de forme (2a, 2b), s'étendent en étant tangentielles ou approximativement tangentielles au pourtour extérieur du tube (1), que chaque mat chauffant (3a, 3b) est réalisé en forme de U, dont les deux branches (12) sont disposées de manière à s'étendre sur le pourtour du tube, tandis que la barre de liaison (13) est disposée suivant respectivement l'une des fentes longitudinales (7a, 7b), et que chaque pièce de forme (2a, 2b) comporte, sur son pourtour extérieur, deux surfaces d'appui (8a 8b) disposées sur la périphérie et enserrant entre elles un évidement semi-annulaire (9a, 9b).

2. Liaison soudée selon la revendication 1, caractérisée en ce que les évidements (9a, 9b) des deux pièces de forme (2a, 2b) forment, avec le pourtour extérieur du tube (1) et les branches (12) du mat chauffant (3a, 3b), une chambre annulaire (10).

3. Liaison soudée selon l'une des revendications 1 ou 2, caractérisée en ce que le mat chauffant (3a ou 3b) est fixé sur le pourtour intérieur de la pièce de forme (2a, 2b).

4. Liaison soudée selon la revendication 2, caractérisée en ce qu'une gaine (16) obturant provisoirement de façon étanche une fuite dans le tube (1) est disposée dans la chambre (10).

5. Liaison soudée selon la revendication 4, caractérisée en ce que la gaine (16) est constituée par une bande d'étanchéité (16) comprimée sur le tube (1) au moyen d'un collier en forme de bande (17).

6. Liaison soudée selon la revendication 4, caractérisée en ce que la gaine (16) est constituée par une bande adhésive possédant une résistance accrue à l'arrachement.

7. Liaison soudée selon l'une des revendications 1 à 3, caractérisée en ce que les pièces de forme (2a, 2b) sont réalisées sous la forme d'un manchon devant relier deux tubes (1).

8. Liaison soudée selon l'une des revendications 1 à 3, caractérisée en ce qu'au moins l'une des pièces de forme (2a) est réalisée sous la forme d'un élément de dérivation pour un tube de dérivation (figures 6-9).

9. Liaison soudée selon l'une des revendications 1 à 3, caractérisée en ce qu'au moins l'une des pièces de forme (2a) est réalisée sous la forme d'une pièce de forme (21) percée (figure 5).

0 076 460

Fig.1

Fig.2

Fig.3

7

## Fig. 4

## Fig. 5

## Fig. 6

## Fig. 7

## Fig. 8

## Fig. 9

13